# DEMANDE DE BREVET EUROPEEN

(11) **EP 1 468 734 A1**
(43) Date de publication de la demande: **20.10.2004**
(21) Numéro de dépôt: 04290453.2
(22) Date de dépôt: 20.02.2004
(51) Int. Cl.: B01J 23/00, B01J 23/06, B01J 21/00, B01J 37/00, C07C 51/00

(54) **Procédé de préparation d'un catalyseur à base d'aluminate de zinc et catalyseur obtenu**

(30) Priorité: 17.03.2003 FR 0303317
(71) Demandeur: Institut Français du Pétrole, 92852 Rueil Malmaison Cédex (FR)
(72) Inventeur: Hillion, Gérard, 95220 Herblay (FR); Leporq, Serge, 78200 Mantes La Ville (FR); Le Pennec, Dominique, 78910 Orgerus (FR); Delfort, Bruno, 75005 Paris (FR)

(57) **Abrégé**

Pour préparer un catalyseur comprenant de l'aluminate de zinc et répondant à la formule :

ZnAl₂O₄, x ZnO, y Al₂O₃

x et y étant compris entre 0 et 2, caractérisé par le fait qu'il. comprend successivement :
- une étape (a) dans laquelle on mélange la quantité d'oxyde de zinc nécessaire à la formation dudit catalyseur, dans laquelle on a remplacé au moins une partie de l'oxyde de zinc par une quantité équivalente d'au moins un sel de zinc choisi parmi le nitrate et le carbonate, avec de l'eau et de l'acide nitrique ;
- une étape (b) dans laquelle on malaxe le mélange précédemment obtenu avec un gel d'alumine peptisée en présence d'un mélange eau/acide nitrique, de manière à former une pâte ;
- une étape (c) dans laquelle on extrude sous pression la pâte issue de l'étape de malaxage ;
- une étape (d) dans laquelle on sèche la pâte extrudée en deux phases successives, la première à une température inférieure à 100 °C, la seconde à une température d'au moins 100 °C ;
- et une étape (e) dans laquelle on calcine la pâte extrudée et séchée.
Le catalyseur obtenu peut servir pour transestérifier des huiles végétales ou animales, neutres ou non, par catalyse hétérogène avec des monoalcools de C1 à C6. Les propriétés mécaniques de résistance à l'écrasement, déterminées selon la méthode en lit SHELL, sont supérieures ou égales à 1 MPa, ce qui permet d'utiliser ce catalyseur dans des installations industrielles pour assurer notamment la production d'esters méthyliques d'huiles, par exemple à usage carburant.

## Description

La présente invention concerne la préparation de catalyseurs à base d'aluminate de zinc et les catalyseurs obtenus.

Le procédé de l'invention comprend un enchaînement d'étapes de mélange, de malaxage, d'extrusion, de séchage et de calcination, menées dans des conditions particulières, qui seront définies ci-après.

On sait que les aluminates de zinc peuvent être utilisés comme catalyseurs dans la fabrication des esters de monoalcools de C1 à C6 d'acides gras de C6 à C26 à partir de différentes sources d'huiles, sans que les éléments métalliques constituant le catalyseur se retrouvent en solution dans les effluents de réaction.

Des procédés de préparation de tels catalyseurs ont déjà été décrit dans la littérature et dans différents brevets français délivrés au nom du même demandeur : FR-B-2 752 242, 2 772 756 et 2 794 768, sans que la résistance à l'écrasement ait été prise en considération.

L'objet de la présente invention est de fournir un nouveau procédé d'obtention d'un catalyseur comprenant de l'aluminate de zinc et répondant à la formule :

ZnAl₂O₄, x ZnO, y Al₂O₃

x et y étant compris entre 0 et 2, dans lequel ZnAl₂O₄ a plus particulièrement une structure de type spinelle ; ledit catalyseur présente en général une résistance à l'écrasement SHELL supérieure ou égale à 1 MPa et est susceptible d'être utilisé dans des procédés de catalyse hétérogène en lit fixe.

Le procédé de l'invention peut être défini par le fait qu'il comprend successivement :
- une étape (a) dans laquelle on mélange la quantité d'oxyde de zinc nécessaire à la formation du catalyseur, dans laquelle on a remplacé au moins une partie de l'oxyde de zinc par une quantité équivalente d'au moins un sel de zinc choisi parmi le nitrate et le carbonate, avec de l'eau et de l'acide nitrique ;
- une étape (b) dans laquelle on malaxe le mélange précédemment obtenu avec un gel d'alumine peptisée en présence d'un mélange eau/acide nitrique, de manière à former une pâte ;
- une étape (c) dans laquelle on extrude sous pression la pâte issue de l'étape de malaxage ;
- une étape (d) dans laquelle on sèche la pâte extrudée en deux phases successives, la première à une température inférieure à 100°C, la seconde à une température d'au moins 100°C ;
- et une étape (e) dans laquelle on calcine la pâte extrudée et séchée, par exemple à une température de 700°C pendant 2 heures.

Dans les catalyseurs obtenus par le procédé de l'invention, le rapport massique Al₂O₃/ZnO est en général compris entre 95/5 et 56/44 ; il est de préférence de 70/30.

On a remarqué d'une façon surprenante que l'ordre d'introduction des divers constituants, le remplacement partiel ou total de l'oxyde de zinc par un autre composé de zinc susceptible de se décomposer thermiquement (le nitrate ou le carbonate), ainsi que l'addition de quantités plus ou moins importantes d'acide nitrique en solution dans l'eau agissant comme agent de peptisation de l'alumine ou comme agent chimique permettant de transformer totalement ou partiellement l'oxyde de zinc en nitrate de zinc, pouvaient être responsables de la modification de certaines propriétés physiques ou mécaniques du catalyseur.

Dans le procédé de préparation des catalyseurs de l'invention, la substitution du ZnO par du nitrate ou du carbonate peut être comprise entre 10 et 100 % du zinc total et de préférence entre 25 et 40 % du zinc total.

D'autre part, les conditions des post-traitements tels que le séchage et la calcination peuvent également influer sur les caractéristiques et notamment la résistance à l'écrasement.

Dans l'étape (a) on mélange en général le sel de zinc choisi parmi le nitrate et le carbonate (ainsi qu'éventuellement l'oxyde de zinc) avec une solution aqueuse d'acide nitrique pendant un temps compris entre 30 et 60 minutes dans un récipient muni d'un agitateur jusqu'à la consistance d'une crème épaisse.

L'étape (b) de malaxage intime du gel d'alumine avec le mélange précédent est généralement réalisé dans un mélangeur-extrudeur. On introduit dans un premier temps le gel d'alumine, sur lequel on ajoute rapidement le mélange d'oxyde de zinc (remplacé tout ou partie par du nitrate et/ou du carbonate de zinc) et d'eau/acide nitrique. Le temps de malaxage est compris par exemple entre 60 et 120 minutes. La température s'élève progressivement pour atteindre une valeur comprise par exemple entre 60 et 65°C. Une addition d'eau peut être envisagée pour que la consistance de la pâte réponde aux critères de l'homme de l'art.

L'étape (c) d'extrusion est généralement réalisée sur une filière d'un diamètre compris entre 1,5 et 3,7 mm de diamètre. Pendant cette étape, la pression à exercer sur la filière est en général supérieure à 20 bar (2 MPa), de façon à obtenir des extrudés compacts et possédant un état de surface sans défaut. Les extrudés récupérés en fin d'opération lorsque la pression est inférieure à cette valeur de 2 MPa ne sont en général pas conservés.

Dans l'étape (d), réalisée en général dans une étuve ventilée, les conditions de séchage peuvent modifier certaines propriétés mécaniques du catalyseur. En effet, si la température de séchage est supérieure ou égale à 100°C, le départ rapide par ébullition de l'eau contenue au coeur des extrudés peut fragiliser ces derniers. Il est donc recommandé d'opérer cette étape de séchage suivant au moins deux phases de température successives : la première phase menée à une température inférieure au point d'ébullition de l'eau, par exemple à 80°C pendant 3 heures, puis une seconde phase menée à une température d'au moins 100°C; cette seconde phase peut comprendre par exemple un palier de 2 heures à 100°C puis un palier de 2 heures à 150°C. A l'issue de ce traitement, il convient que les extrudés n'accusent plus de perte de poids.

Dans l'étape (e), on calcine en général les extrudés dans un four à moufle de façon à former le spinelle d'aluminate de zinc. Les conditions de calcination peuvent être les suivantes :
- un temps de calcination compris entre 2 et 4 heures à une température comprise entre 400 et 700°C, de préférence 2 heures à une température de 700 °C ;
- avec un gradient de montée en température compris entre 3 et 6 °C/ minute.

Dans ces conditions, la teneur résiduelle en oxyde de zinc (zincite), mesurée par diffraction X, est faible, souvent inférieure à 2 % en masse.

La caractérisation du spinelle d'aluminate de zinc appelé "Gahnite" et défini par la formule ZnAl₂O₄ peut également être effectuée par diffraction X.

La teneur massique de l'élément zinc du catalyseur obtenu peut être déterminée par fluorescence X. Elle est comprise, dans l'exemple utilisant un mélange respectif d'alumine et d'oxyde de zinc de 70/30 en poids, entre 22 et 24 % en zinc.

Une des propriétés mécaniques des extrudés est mesurée par le test SHELL de résistance à l'écrasement qui est une méthode référencée (Shell Method Series SMS1471-74 "Determination of Bulk Crushing Strength of Catalysts"; Compression-Sieve Method). Elle permet de déterminer la résistance à l'écrasement en lit de solides et plus particulièrement de catalyseurs dans la gamme de pressions comprises entre 0 et 2,33 MPa. Elle s'applique aux billes ou aux extrudés (ayant une longueur inférieure ou égale à 6 mm).

Le principe de cette méthode est le suivant :

Après avoir placé environ 20 cm³ de catalyseur dans un cylindre métallique de section interne connue, on applique par l'intermédiaire d'un piston une force croissante par paliers. Les fines obtenues aux différentes pressions sont séparées par tamisage et pesées. Le tamis utilisé a une maille de 420 µm.

Ce test est surtout utilisé pour la mise en oeuvre de catalyseurs en lit fixe. La résistance à l'écrasement en lit est déterminée par la pression en mégaPascal (MPa) pour laquelle la quantité de fines cumulées passant à travers le tamis s'élève à 0,5 % en masse de l'échantillon. Cette valeur est obtenue en traçant sur un graphique la masse de fines obtenue en fonction de la force appliquée sur le lit de catalyseur et en interpolant à 0,5 % en masse de fines cumulées.

Une valeur égale ou supérieure à 1 MPa permet d'assurer un chargement du catalyseur, en minimisant les risques de formation de fines susceptibles de boucher les crépines ou filtres placés en aval du réacteur de catalyse et qui pourraient créer des pertes de charge importantes dans l'installation.

D'autre part, la composition massique des différents éléments métalliques, ainsi que certaines caractéristiques physiques et mécaniques du catalyseur sont des paramètres qui doivent être bien maîtrisés. Il s'agit en particulier du ratio Zn/Al exprimé en % poids (déterminé par fluorescence X), des teneurs en ZnAl₂O₄ (spinelle formé) et en ZnO libre résiduel (déterminées par diffraction X), de la surface BET, du volume poreux, de la résistance à l'écrasement SHELL, ainsi que de la densité de remplissage.

Les catalyseurs préparés comme décrit dans l'invention permettent de transestérifier des huiles végétales ou animales, neutres ou non, par catalyse hétérogène avec des monoalcools de C1 à C6.

Les exemples suivants illustrent l'invention mais ne doivent en aucune manière en limiter la portée.

Dans ces exemples, pour préparer les aluminates de zinc, on a utilisé les produits et réactifs suivants :
- gel d'alumine de Condéa (teneur en eau : 25,925 % en poids) ;
- oxyde de zinc "Activ" de Bayer (teneur en eau : 5 % en poids) ;
- acide nitrique RP de Prolabo à 68 % ;
- nitrate de zinc à 6 molécules d'eau (RP de Prolabo) ;
- eau désionisée.

Le matériel utilisé pour effectuer le malaxage et l'extrusion des Exemples 1 à 5 est un malaxeur à bras Z du type Aoustin MX0,4 et une extrudeuse à piston du type RETMA avec filière d'un diamètre de 3 mm.

Pour des préparations plus importantes le matériel utilisé est un malaxeur-extrudeur bi-vis Aoustin MX2E pour les Exemples 6, 7 et 8.

### Exemple 1 (comparatif)

On introduit 75,6 g de gel d'alumine "Condéa", soit l'équivalent de 56 g de gel sec dans un malaxeur de type Aoustin MX0,4, avec 75 ml de solution aqueuse contenant 4,4 g d'acide nitrique à 68 % poids de pureté. On malaxe pendant 30 minutes.

On ajoute 24 g d'oxyde de zinc "Activ". On malaxe pendant 1 heure 15 min en ajoutant à intervalles réguliers 9 ml d'eau à quatre reprises soit un total de 36 ml d'eau.

On extrude ensuite sur l'extrudeuse RETMA équipée d'une filière d'un diamètre de 3 mm.

Le rapport massique Al₂O₃/ZnO (rapporté à la matière sèche) est de 70/30.

Les extrudés obtenus sont séchés 4 heures à 100°C dans une étuve ventilée, puis à 150 °C pendant 3 heures, après quoi, on effectue d'une étape de calcination sous débit de 9,6 l/h d'air sec dans un four tubulaire que l'on amène à la température de 700 °C à raison de 7 °C/min. La température de 700 °C est maintenue pendant 2 heures. On laisse refroidir dans le four sous débit d'air.

Les valeurs de l'écrasement SHELL sont consignées dans le Tableau 1.

### Exemple 2

On conserve un rapport massique Al₂O₃/ZnO identique, mais en substituant une partie du ZnO par du nitrate de zinc, ce dernier représentant 33 % du zinc total.

On malaxe au préalable le nitrate de zinc en présence de l'oxyde de zinc avant introduction du gel d'alumine.

Dans le malaxeur Aoustin MX0,4, on introduit 16 g de ZnO "Activ", puis on ajoute une solution aqueuse constituée de 30 g de Zn(NO₃)₂, 6H₂O (soit l'équivalent de 8 g de ZnO) et de 15 ml d'eau désionisée. On malaxe pendant 30 minutes, puis on ajoute 75,6 g de gel d'alumine hydraté (soit 56 g ramené à la matière sèche) et 60 ml d'une solution aqueuse contenant 6 g d'acide nitrique à 68 %. On malaxe pendant 75 minutes. On obtient une pâte ferme que l'on introduit dans l'extrudeuse à piston RETMA. On extrude sur filière de diamètre 3 mm. Les extrudés obtenus sont séchés 4 heures à 100 °C dans une étuve ventilée, puis à 150°C pendant 3 heures, suivi d'une étape de calcination sous débit de 9,6 l/h d'air sec dans un four tubulaire que l'on amène à la température de 700 °C à raison de 7°C/min. La température de 700°C est maintenue pendant 2 heures. On laisse refroidir dans le four sous débit d'air.

Les valeurs de l'écrasement SHELL sont consignées dans le Tableau 1.

### Exemple 3

Une variante concernant l'étape de calcination est réalisée sur une partie des extrudés issus de l'Exemple 2 après l'étape de séchage. L'étape de calcination se déroule, dans ce cas, sous atmosphère humide dans un four tubulaire. Les conditions sont les suivantes : on monte la température du four à raison de 7 °C/min jusqu'à 700 °C. Le débit de 9,6 l/h d'air chargé à 50 % d'humidité est introduit à partir de 200 °C. La température de 700 °C est maintenue pendant 2 heures. Le refroidissement des extrudés est réalisé sous courant d'air sec à partir de 400 °C et jusqu'à refroidissement complet.

Les valeurs de l'écrasement SHELL sont consignées dans le Tableau 1.

### Exemple 4

On utilise les mêmes quantités de réactifs que dans l'Exemple 2, mais on modifie l'ordre d'introduction des différents constituants, comme suit :

On malaxe au préalable le gel d'alumine avec une solution nitrique de peptisation, puis on introduit du mélange aqueux de nitrate de zinc et d'oxyde de zinc.

Dans le malaxeur Aoustin MX0,4, on introduit 75,6 g de gel d'alumine (soit 56 g de matière sèche), puis 60 ml de solution aqueuse contenant 6 g d'acide nitrique à 68 % et on malaxe pendant 30 minutes. On ajoute successivement 16 g de ZnO, puis 50 g de la solution constituée de 30 g de nitrate de zinc et de 20 ml d'eau. On malaxe ce mélange pendant 75 minutes.

On obtient une pâte ferme que l'on introduit dans l'extrudeuse à piston RETMA. On extrude sur filière de diamètre 3 mm. Les extrudés obtenus sont séchés 4 heures à 100°C dans une étuve ventilée, puis à 150°C pendant 3 heures, après quoi on effectue une étape de calcination dans un four à moufle à 700 °C pendant 2 heures. On laisse refroidir dans le four sous atmosphère d'air.

Les valeurs de l'écrasement SHELL sont consignées dans le Tableau 1

### Exemple 5

On suit le même mode opératoire que dans l'Exemple 2, mais avec une substitution de 50 % en équivalent ZnO par du nitrate de zinc, au lieu des 33 % considérés dans l'Exemple 2.

Dans le malaxeur Aoustin MX0,4, on introduit 12 g de ZnO "Activ", puis on ajoute une solution aqueuse constituée de 45 g de Zn(NO₃)₂, 6H₂O (soit l'équivalent de 8 g de ZnO) et de 15 ml d'eau désionisée. On malaxe pendant 30 minutes, puis on ajoute 75,6 g de gel d'alumine hydraté (soit 56 g ramené à la matière sèche) et 60 ml d'une solution aqueuse contenant 6 g d'acide nitrique à 68 %. On malaxe pendant 75 minutes. Les opérations qui suivent sont identiques à celles détaillées dans l'Exemple 2.

Les valeurs de l'écrasement SHELL sont consignées dans le Tableau 1.

**Tableau 1 :**

| **Résultats du test de résistance à l'écrasement SHELL** | |
|---|---|
| Catalyseurs sous forme d'extrudés | Résistance à l'écrasement (exprimée en MPa) |
| Exemple 1 | 0,23 |
| Exemple 2 | 0,83 |
| Exemple 3 | 0,49 |
| Exemple 4 | 0,43 |
| Exemple 5 | 0,91 |

### Exemple 6

Dans un malaxeur extrudeur bi-vis AOUSTIN MX2E, on introduit 483,5 g de gel d'alumine (Condéa) correspondant à 350 g d'alumine ramené au poids sec et 150 g d'oxyde de zinc "Activ" (Bayer) correspondant à 142,5 g d'oxyde de zinc ramené au poids sec, de façon à obtenir un mélange intime des oxydes. Puis on ajoute rapidement sur ce mélange agité, 370 ml d'une solution nitrique contenant 50 g d'acide nitrique à 68 % de pureté (soit 34 g d'HNO₃ pur). Le malaxage est assuré pendant 20 minutes jusqu'à l'obtention d'une pâte homogène à consistance ferme. Le sens de rotation de la vis est inversé et la pâte est facilement extrudée sur une filière de diamètre 3 mm. On obtient 833 g d'extrudés.

Le séchage est réalisé dans une étuve ventilée 4 heures à 100 °C, puis 3 heures à 150 °C. On obtient après refroidissement 510 g d'extrudés.

La calcination est réalisée dans un four à moufle sous air. L'introduction des extrudés se fait à four froid. La montée en température est programmée avec un gradient de température de 10°C/minutes jusqu'à atteindre la température de 700 °C, qui est maintenue pendant 2 heures. Le refroidissement est réalisé dans le four jusqu'à refroidissement complet. On obtient en final 423 g d'extrudés

La caractérisation du catalyseur est donnée dans le Tableau 2.

### Exemple 7

Dans un Becher de 2 litres avec barreau aimanté, on introduit 450 g de nitrate de zinc cristallisé à 6 molécules d'eau, puis 225 ml d'eau désionisée et 45 g d'acide nitrique à 68 %.

Après dissolution du nitrate de zinc, on ajoute 240 g d'oxyde de zinc, puis on laisse en contact sous agitation pendant 45 minutes.

Dans le malaxeur extrudeur bi-vis, on introduit 1134 g de gel d'alumine, soit l'équivalent de 840 g de produit sec. Dès la mise en route des bras du malaxeur, on ajoute le mélange précédemment obtenu et constitué du nitrate de zinc, d'oxyde de zinc, d'acide nitrique et d'eau. Après 2 minutes de mélange, on provoque la peptisation de l'alumine par l'ajout de 700 ml d'une solution aqueuse contenant 45 g d'acide nitrique à 68 %. On rince le Becher ayant contenu les composés de zinc avec 55 ml d'eau et on ajoute l'eau de rinçage sur la pâte présente dans le malaxeur. On laisse malaxer 75 minutes sur malaxeur ouvert jusqu'à obtention d'une pâte homogène ferme.

On extrude sur filière de diamètre 3 mm après inversion du sens de rotation de la vis. On obtient 3116 g d'extrudés.

Le séchage est réalisé dans une étuve ventilée à 100 °C pendant 4 heures, puis à 150°C pendant 3 heures. Après refroidissement, on obtient 1618 g d'extrudés.

La calcination est réalisée dans un four à moufle avec introduction du produit "four froid". On programme la montée en température avec un gradient de 10°C/minute jusqu'à atteindre la température de 700 °C, que l'on maintient pendant 2 heures. On obtient en final, après refroidissement à l'air, 1257 g d'extrudés.

La caractérisation du catalyseur est donnée dans le Tableau 2.

**Tableau 2 -**

| **récapitulatif des résultats des catalyseurs des Exemples 6 et 7** | | | |
|---|---|---|---|
| Analyses | Unités | Catalyseur de l'Exemple 6 | Catalyseur de l'Exemple 7 |
| Surface spécifique BET | m²/g | 142 | 92 |
| Porosité au mercure : - Volume de Hg - Densité de grain | ml/g g/ml | 0,52 1,284 | 0,45 1,460 |
| PAF (Perte au feu) 3 h à 1000°C | % en poids | 7,0 | 4,3 |
| Ecrasement SHELL | MPa | 0,71 | 1,05 |
| Densité de remplissage | g/ml | 0,780 | 0,796 |
| Géométrie diamètre moyen | mm | 2,7 | 2,4 |
| Teneur en zinc (Fluorescence X) | % en poids | 23 | 23,2 |
| Teneur en ZnAl₂O₄ (gahnite) | % en poids | 55 | 61,0 |
| Teneur en Al₂O₃ (alumine gamma) | % en poids | 40 | 37,2 |
| Teneur en ZnO (zincite) | % en poids | 4,0 | 1,8 |

### Exemple 8

Tout en conservant le rapport massique Al₂O₃/ZnO de 70/30, une variante à ce mode de préparation a permis d'obtenir de bonnes performances mécaniques aux extrudés en favorisant, dans certaines conditions, la formation *in situ* du nitrate de zinc par action directe d'une solution aqueuse d'acide nitrique et d'oxyde de zinc.

Ce mode opératoire présente certains avantages, notamment de permettre d'utiliser un seul composé de zinc, l'oxyde de zinc "Activ" de Bayer, et également de diminuer de l'ordre de 30 % la quantité de vapeurs nitreuses générée lors de l'étape de calcination.

Dans un Becher de 2 litres avec barreau aimanté, on introduit 360 g d'oxyde de zinc "Activ", puis on y verse 900 ml d'une solution aqueuse contenant 180 g d'acide nitrique à 68 % ; on maintient le mélange agité pendant 30 minutes, puis on laisse en contact 24 heures à température ambiante.

Dans le malaxeur-extrudeur bi-vis, on introduit 1134 g de gel d'alumine, soit l'équivalent de 840 g de produit sec. Dès la mise en route des bras du malaxeur on ajoute le mélange précédemment obtenu et constitué d'une suspension d'oxyde de zinc dans le mélange eau/acide nitrique. On rince ensuite le récipient ayant contenu le mélange ZnO/eau-acide nitrique avec 250 ml d'une solution aqueuse contenant 45 g d'acide nitrique à 68 %. On malaxe pendant 90 minutes en ajoutant séquentiellement 400 ml d'eau de façon à obtenir une consistance de pâte souple et ferme. On extrude sur filière de diamètre 3 mm après inversion du sens de rotation de la vis.

Le séchage est réalisé dans une étuve ventilée à 100 °C pendant 4 heures, puis à 150 °C pendant 3 heures.

La calcination est réalisée dans un four à moufle avec introduction du produit four froid. On programme la montée en température avec un gradient de 10°C/minute jusqu'à atteindre la température de 700 °C, que l'on maintient pendant 2 heures. On refroidit lentement dans le four sous atmosphère d'air.

Les extrudés ainsi obtenus possèdent une valeur d'écrasement SHELL de 1,12 MPa.

## Revendications

1. Procédé de préparation d'un catalyseur comprenant de l'aluminate de zinc et répondant à la formule :
ZnAl₂O₄, x ZnO, y Al₂O₃
x et y étant compris entre 0 et 2, **caractérisé par le fait qu'**il comprend successivement :
- une étape (a) dans laquelle on mélange la quantité d'oxyde de zinc nécessaire à la formation dudit catalyseur dans laquelle on a remplacé au moins une partie de l'oxyde de zinc par une quantité équivalente d'au moins un sel de zinc choisi parmi le nitrate et le carbonate, avec de l'eau et de l'acide nitrique ;
- une étape (b) dans laquelle on malaxe le mélange précédemment obtenu avec un gel d'alumine peptisée en présence d'un mélange eau/acide nitrique, de manière à former une pâte ;
- une étape (c) dans laquelle on extrude sous pression la pâte issue de l'étape de malaxage ;
- une étape (d) dans laquelle on sèche la pâte extrudée en deux phases successives, la première à une température inférieure à 100°C, la seconde à une température d'au moins 100 °C ;
- et une étape (e) dans laquelle on calcine la pâte extrudée et séchée.

2. Procédé selon la revendication 1 **caractérisé en ce que** l'étape (a) est effectuée pendant un temps compris entre 30 et 60 minutes dans un récipient muni d'un agitateur jusqu'à la consistance d'une crème épaisse.

3. Procédé selon l'une des revendications 1 et 2 **caractérisé en ce que** l'étape (b) de malaxage est réalisée dans un mélangeur-extrudeur.

4. Procédé selon la revendication 3 **caractérisé en ce que**, dans l'étape (b), on introduit dans un premier temps le gel d'alumine sur lequel on ajoute rapidement le mélange de sel de zinc, le cas échéant d'oxyde de zinc, et d'eau/acide nitrique, le temps de malaxage étant compris entre 60 et 120 minutes.

5. Procédé selon la revendication 3 ou 4 **caractérisé en ce que**, pendant le malaxage, la température s'élève progressivement pour atteindre une valeur comprise entre 60 et 65 °C.

6. Procédé selon l'une des revendications 3 à 5 **caractérisé en ce que** l'on ajoute de l'eau pendant le malaxage pour atteindre une consistance convenable de la pâte.

7. Procédé selon l'une des revendications 1 à 6 **caractérisé en ce que** l'étape (c) consiste à extruder sur une filière d'un diamètre compris entre 1,5 et 3,7 mm de diamètre la pâte ainsi obtenue.

8. Procédé selon la revendication 8 **caractérisé en ce que**, dans l'étape (c) on exerce sur la filière une pression supérieure à 2 MPa, de façon à obtenir des extrudés compacts et possédant un état de surface sans défaut.

9. Procédé selon l'une des revendications 7 et 8 **caractérisé en ce que**, lorsque, en fin d'opération, la pression redevient inférieure à 2 MPa, on ne conserve pas les extrudés récupérés.

10. Procédé selon l'une des revendications 1 à 9 **caractérisé en ce que**, l'étape (d) de séchage est réalisée dans une étuve ventilée.

11. Procédé selon la revendication 10 **caractérisé en ce que**, l'on opère ladite première phase de séchage à environ 80 °C pendant 3 heures, puis l'on opère ladite seconde phase de séchage en deux paliers, à 100 °C pendant environ 2 heures puis à environ 150 °C pendant environ 2 heures.

12. Procédé selon l'une des revendications 1 à 11 **caractérisé en ce que** l'étape (e) est réalisée à une température comprise entre 400 et 700°C pendant un temps de compris entre 2 et 4 heures

13. Procédé selon la revendication 12 **caractérisé en ce que** l'étape (e) est réalisée à une température d'environ 700 °C pendant environ 2 heures avec un gradient de montée en température compris entre 3 et 6°C/ minute.

14. Catalyseur comprenant de l'aluminate de zinc et répondant à la formule :
ZnAl₂O₄, x ZnO, y Al₂O₃
x et y étant compris entre 0 et 2, obtenu par un procédé selon l'une des revendications 1 à 13.

15. Catalyseur selon la revendication 14 **caractérisé en ce qu'**il présente une teneur résiduelle en zincite, mesurée par diffraction X, inférieure à 2 % en masse.
